# DEMANDE DE BREVET EUROPEEN

(11) **EP 1 775 151 A1**
(43) Date de publication de la demande: **18.04.2007**
(21) Numéro de dépôt: 06291599.6
(22) Date de dépôt: 13.10.2006
(51) Int. Cl.: B60J 7/14

(54) **Elément de toit rigide, toit et vehicule convertible correspondants**

(30) Priorité: 13.10.2005 FR 0510473
(71) Demandeur: Heuliez, 79142 Cerizay Cedex (FR)
(72) Inventeur: Deschatres, Bernard, 79300 Saint Sauveur Givre en Mai (FR); Collet, Jean-Yves, 85290 Mortagne sur Sevre (FR)
(74) Mandataire: Pichat, Thierry

(57) **Abrégé**

Est concerné un élément d'un toit rigide mobile par rapport à une caisse (3) d'un véhicule transformable. Cet élément est réalisé à partir d'une structure porteuse monobloc (210) présentant une forme de cadre (21). La structure porteuse monobloc est de préférence une structure moulée.

## Description

Il s'agit ici de proposer un élément de toit, un toit et un véhicule à toit rigide mobile par rapport à la caisse de celui-ci.

Des toits ou éléments de toit connus sont réalisés à partir de tôles mises en forme sur lesquelles on fixe des bras de renfort portant des articulations du toit ou bien des parties de pivot d'articulation.

Ceci pose des problèmes de réalisation, d'assemblage, de possible déformations au moins locales, voire de volume, de poids, donc de coût, ou encore parfois de vibrations, lorsque le véhicule roule.

Pour apporter une solution à tout ou partie de ces problèmes, on propose en particulier que l'élément de toit rigide précité soit réalisé à partir d'une structure porteuse monobloc présentant une forme de cadre périphérique.

Un cadre nervuré sur tout ou partie de sa périphérie est conseillé pour associer rigidité, légèreté et conditions favorables de fabrication, en particulier par moulage.

La structure sera ainsi obtenue avantageusement par moulage, de préférence par injection.

Toujours dans le même but, on a prévu, en alternative ou en combinaison totale ou partielle entre elles, les caractéristiques suivantes :
- la structure porteuse monobloc est une structure moulée à partir d'un alliage léger métallique,
- c'est une structure moulée contenant essentiellement de l'aluminium ou du magnésium,
- en alternative, il s'agit :
   * d'une structure moulée à partir d'un alliage léger synthétique, au moins essentiellement, voire
   * d'une structure moulée de type BMC (Bulk Moulding Compound - moulage d'une pièce de forme, en volume, à partir d'un mélange de matériaux), ou
   * d'une structure moulée à partir d'une ou plusieurs nappes fibreuses, telles que comprenant des fibres de verre ou de carbone, noyées dans une résine, ou
   * d'une structure moulée comprenant une résine thermoplastique ou thermodurcissable pouvant contenir des fibres,
- le cadre périphérique comprend une partie de renfort transversal appartenant à la structure monobloc,
- cette partie de renfort présente globalement une forme de poutre ayant des flancs reliés par des nervures,
- cette partie de renfort est reliée à des pattes de pivots d'articulation de cet élément de toit et/ou de cet élément de toit des pattes de fixation de moyens d'actionnement dudit élément de toit, lesdites pattes appartenant à la structure monobloc,
- cette partie de renfort intègre un élément définissant une tablette (en particulier tablette de recouvrement d'un espace entre l'arrière des sièges arrière de l'habitacle et l'arrière du toit, toit fermé au-dessus de cet habitacle),
- le cadre périphérique présente au moins une ouverture qu'il entoure en périphérie et reçoit au moins un élément de recouvrement recouvrant une partie au moins de ladite ouverture,
- typiquement, outre ci-dessus, le cadre est habillé par ledit élément de recouvrement en face supérieure et par une doublure d'habillage en face inférieure, côté habitacle,
- le cadre comprend au moins deux parties latérales en forme de bras monoblocs, à/vers l'arrière, avec une partie transversale arrière, ces bras s'étendant vers l'avant, pour remplacer fonctionnellement les « bras de renfort » conventionnels précités. De préférence ce cadre périphérique présentera un périmètre fermé.

Concernant le toit en lui-même, on conseille que le cadre périphérique précité présente au moins localement une forme de poutre ouverte vers l'habitacle, toit fermé, et essentiellement lisse à l'opposé, avec des flancs reliés par des nervures. Que le cadre, ouvert d'un côté ou totalement fermé en périphérie, porte -telles des pattes intégrées- des articulations entre des éléments rigides de toit avant et arrière et/ou entre un élément rigide de toit central -typiquement l'élément «arrière» précité- et des éléments latéraux de toit -typiquement des custodes mobiles, en particulier pivotantes- est également conseillé.

On conseille aussi que, pour assurer le mouvement du toit par rapport à la caisse, le toit repose sur un pivot d'actionnement portant une biellette articulée à une seconde biellette elle-même articulée à proximité du pivot, voire sur son axe. La partie d'articulation entre les deux bielles sera a priori reliée à la partie mobile de l'actionneur (tige de vérin).

En particulier si l'élément de toit est un élément arrière du toit qui comprend la lunette arrière et qu'un élément rigide avant de toit s'étend devant lui toit fermé au-dessus de l'habitacle, et si, pour l'articulation du toit, un bras est adjoint, articulée à l'arrière sur la caisse et lié à l'avant à l'un au moins desdits éléments de toit, alors la première biellette sera favorablement articulée sur l'élément arrière de toit, à l'écart dudit bras, à la différence de ce qui est prévu dans FR-C-2 728 199 (avec le bras 17).

Cette « première biellette » sera ainsi articulée sur la structure même de l'élément de toit concerné, et non pas sur un bras d'articulation.

Concernant maintenant le véhicule, on conseille que les nervures du cadre périphérique précité soient tournées vers l'intérieur du véhicule, lorsque le toit est fermé au-dessus de l'habitacle.

D'autres caractéristiques importantes sont revendiquées.

Ci-après suit une description d'au moins un mode de réalisation cité en exemple non limitatif, en liaison avec des dessins dans lesquels :
la figure 1 est un schéma de véhicule, toit à deux éléments, fermé,
la figure 2 montre de côté, le véhicule de la fig.1, toit fermé et ouvert (traits fantômes),
la figure 3 est un schéma de véhicule, toit à quatre éléments, fermé au dessus de l'habitacle,
la figure 4 schématise le même toit, avec ses articulations,
les figures 5, 6 et 7 montrent une structure porteuse monobloc conforme à l'invention,
la figure 8 est la coupe VIII-VIII de la fig.5,
les figures 9, 10 et 11 schématisent en coupe dans le plan médian l'articulation de l'élément arrière de toit sur la caisse,
la figure 12 montre une solution où l'axe du pivot d'une biellette est coaxial à l'axe de pivotement de l'élément rigide de toit par rapport à la caisse,
et les figures 13 et 14 montrent une structure porteuse monobloc à cadre périphérique ouvert.

Sur les figures, les ronds portant une croix indiquent un pivot ou un axe d'articulation et les traits noirs renforcés les reliant des biellettes, bielles ou bras d'articulation,

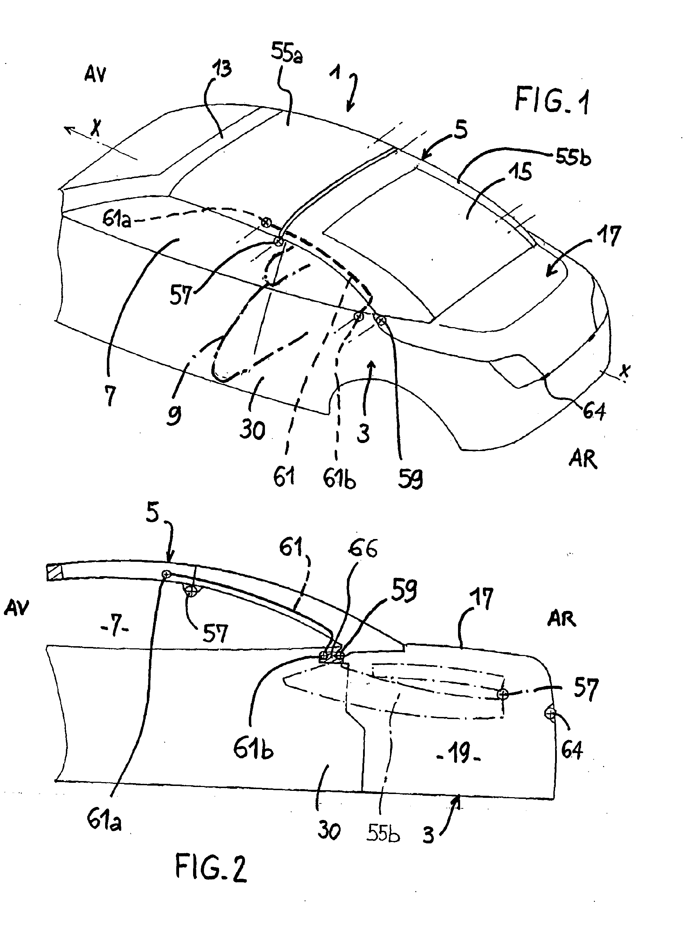

Figure 1, on voit un véhicule 1 comprenant une caisse, ou bâti structurel, 3 définissant ou relié à, en partie haute, un toit 5 qui, avec une zone environnante de la carrosserie 30 équipant cette caisse 3, définit l'habitacle intérieur 7.

Cet habitacle 7 accueille une ou plusieurs rangées de sièges, tels que les sièges 9 situés vers l'arrière de l'habitacle. L'avant du véhicule est marqué AV, l'arrière ARR.

Figure 1, l'habitacle 7 est recouvert par le toit 5 qui, fermé, s'étend longitudinalement (suivant l'axe longitudinal médian X du véhicule) entre la traverse supérieure 13 du pare-brise et, à l'arrière, la vitre arrière (ou lunette arrière) 15 dressée globalement transversalement à l'axe longitudinal X.

Le toit 5 est mobile entre une première position dans laquelle il recouvre au moins en partie l'habitacle 7 et une deuxième position dans laquelle cet habitacle est au moins en partie dégagé, le toit étant alors situé à l'écart du dessus de l'habitacle. Favorablement, il s'agira d'un toit articulé vis-à-vis de la caisse 3, même si un toit retirable (par complète séparation avec la caisse 3 et donc le véhicule) est envisageable, par exemple un « hard top ».

Par ailleurs, ce toit 5 est ici un toit rigide. Il s'agit en particulier d'un toit comprenant au moins deux éléments rigides 55a, 55b de recouvrement de l'habitacle, respectivement un élément avant 55a et un élément arrière 55b situé derrière l'élément avant, au moins dans ladite première position du toit au-dessus de l'habitacle 7, ces éléments avant et arrière étant ici articulés l'un par rapport à l'autre autour d'un premier pivot 57 s'étendant sensiblement perpendiculairement à l'axe longitudinal X du véhicule.

Concernant ce pivot, comme les autres articulations ci-après du toit, on doit comprendre que ce qui est indiqué concerne un côté du véhicule, l'autre étant de préférence pourvu de même, par symétrie par rapport à un plan médian vertical (30) passant par l'axe X.

Ceci précisé, l'élément arrière 55b du toit est en outre articulé par rapport à la caisse 3 autour d'un second pivot 59 s'étendant sensiblement perpendiculairement audit axe longitudinal X. Le passage du toit de sa première à sa seconde position inclut un pliage des éléments avant et arrière du toit l'un vers l'autre, ainsi que cette articulation de l'élément arrière de toit 55b autour du pivot 59 (voir toit plié dans l'espace 19, traits mixtes figure 2).

De chaque côté, un bras d'articulation 61 définissant un moyen d'actionnement, commande par ailleurs l'articulation de l'élément avant de toit 55a, par rapport à la caisse et à l'élément arrière de toit 55b.

En 61a et 61b figurent les pivots de rotation, respectivement avant et arrière, de l'élément de toit 55a, respectivement par rapport à l'élément arrière de toit 55b et à la caisse 3.

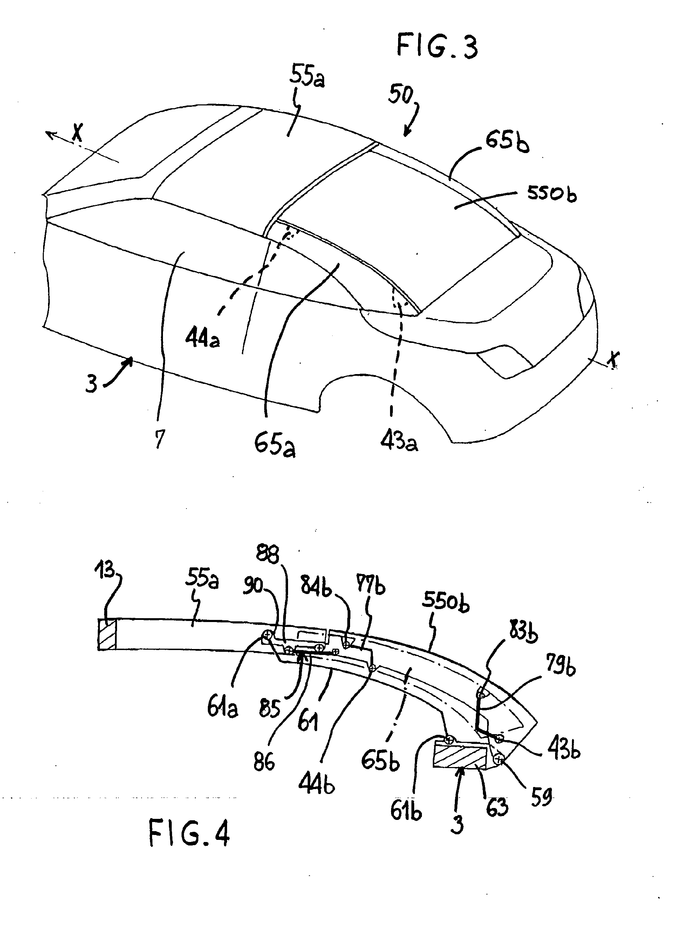

D'autres éléments de toit, tels que des custodes articulées et/ou une lunette articulée, pourraient aussi être prévue(s), de même que d'autres mécanismes de mouvement du toit (oscillo-coulissant, éléments coulissants sur des glissières...) ; voir figures 3 et 4 et description plus loin dans le texte.

L'espace arrière de rangement (ou de chargement) 19 est situé en contrebas du sommet de la vitre arrière 15 et, ici, du toit 5 alors fermé.

La limite arrière basse du toit 5 définit également, et sensiblement, la limite avant d'un capot mobile 17 adapté pour recouvrir ou libérer l'accès à une zone de rangement arrière 19 qui, ici, est un coffre arrière.

La zone de rangement 19 reçoit au moins le toit plié (figure 2, traits fantômes), voire des bagages ou autres charges.

Au-dessus de cette zone est articulé le capot 17, pour en ouvrir ou fermer l'accès. Ici, on a figuré en 64 l'un des pivots d'articulation arrière du capot par rapport à la caisse, pour qu'il s'ouvre en basculant de l'avant vers l'arrière du véhicule. Le capot peut être en plusieurs parties ayant des mouvements d'ouverture/fermeture différents.

Figure 1, l'élément avant de toit 55a se présente globalement comme une plaque cintrée s'étendant transversalement à l'axe X sur sensiblement toute la largeur du toit.

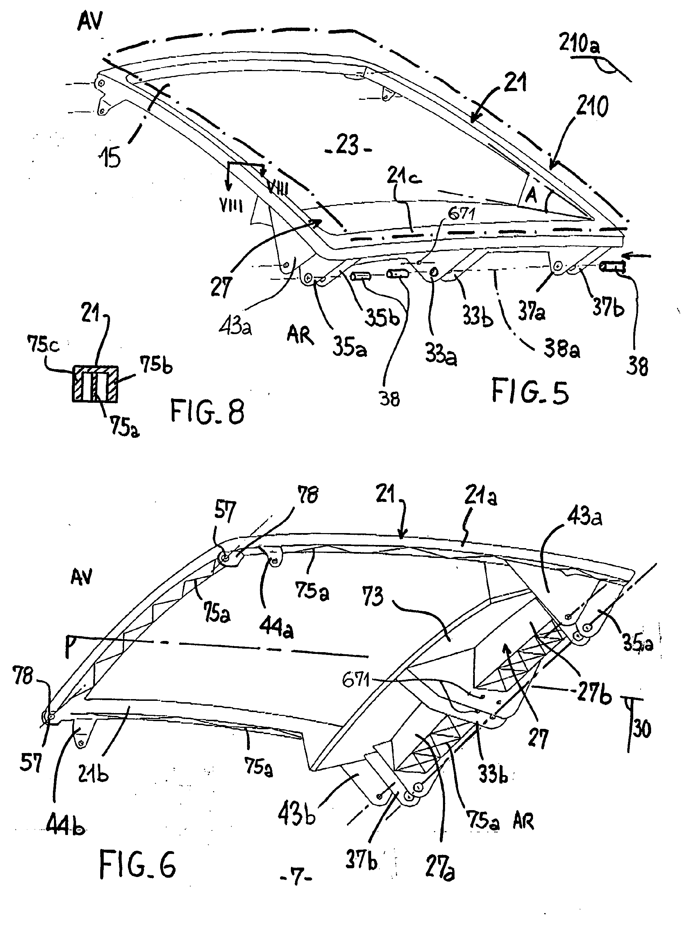

L'élément arrière de toit 55b, voire éventuellement l'élément avant de toit, est réalisé à partir d'une structure porteuse monobloc 210 présentant une forme de cadre périphérique 21 entourant périphériquement au moins une ouverture 23 et recevant, a priori par-dessus, au moins un élément de recouvrement (traits fantômes, figure 5) recouvrant une partie au moins de l'ouverture 23. Ici, cet élément de recouvrement est la vitre de lunette arrière 15.

La structure porteuse monobloc 210 est ici une structure moulée, de préférence obtenue par injection.

Avantageusement, il s'agira de moulage d'alliages légers, en particulier d'alliages légers métalliques à base de (c'est-à-dire contenant essentiellement, majoritairement du) magnésium, ou bien à base d'aluminium. Un alliage de magnésium avec une composition d'environ 95 % de magnésium et 5 % d'aluminium offrira un bon compromis entre le poids de l'élément de toit et sa résistance mécanique, en particulier sa flexion. Un alliage à base d'aluminium (de l'ordre de 95 %) sera un peu plus lourd, mais par contre plus résistant.

Il est également possible d'utiliser un moulage par injection de type BMC (Bulk Moulding Compound), c'est-à-dire un moulage par injection de fibres et de résine. Il peut s'agir de matériaux thermoplastiques ou thermodurcissables.

Comme ici, ces moulages BMC permettent d'obtenir, à partir donc d'un composite ou mélange de matériaux, des pièces de forme, en volume, et non pas simplement des plaques ou des feuilles.

On pourra également envisager des moulages à partir de nappes fibreuses, telles que fibres de verre ou fibres de carbone, noyées dans un liant, typiquement une résine.

Dans les cas d'utilisation de fibres (BMC, nappes fibreuses...) il sera intéressant d'orienter les fibres de sorte à favoriser la résistance de l'élément de toit concerné.

De préférence le cadre périphérique 21 présentera un périmètre fermé, comme illustré figures 5 à 7.

Favorablement, ce cadre possède ici une partie 27 de renfort transversal appartenant à la structure monobloc.

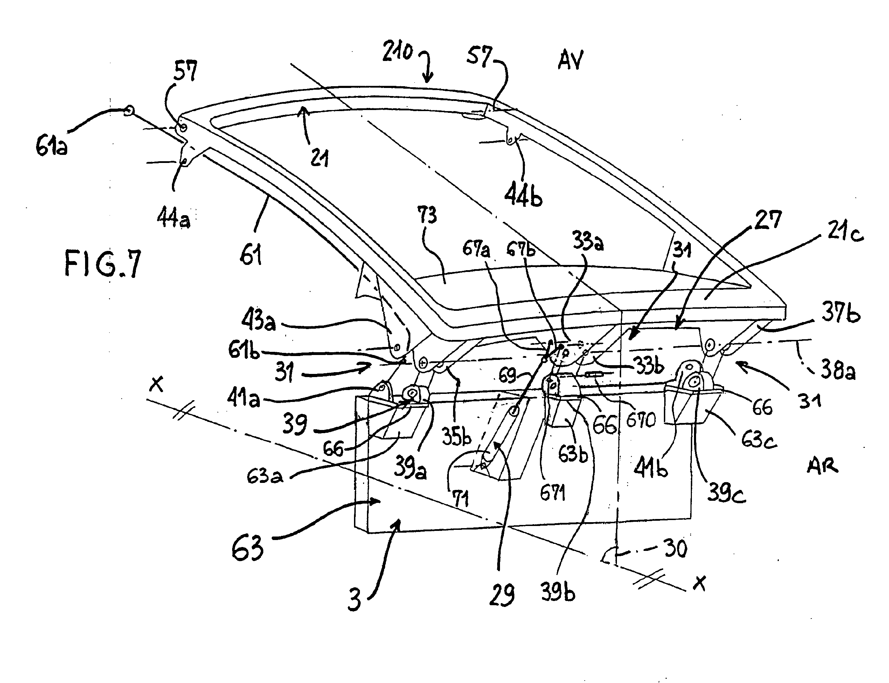

Sur la caisse du véhicule, comme schématisé figure 7, cette partie 27 constituera de préférence un renfort arrière structurant par une sorte de traverse cette zone transversale arrière proche des moyens de commande, ou d'actionnement, (tels l'actionneur 29) et/ou des pivots d'articulation sur la caisse 3 de l'élément arrière de toit 55b ici visé (pivots repérés globalement en 31, figure 7).

Cette traverse, qui s'étendra globalement, une fois la pièce montée sur la caisse, transversalement à l'axe X, pourra donc recevoir, sur elle ou à proximité immédiate sur la structure 210, la poussée du ou des actionneurs de toit (29, notamment). Elle pourra donc aussi porter l'articulation arrière de ce toit.

En particulier figure 6, la traverse 27 apparaît comme comprenant, au sein de cet ensemble monobloc qu'est ladite structure porteuse, et spécifiquement ici au sein du cadre périphérique, deux parties de poutres 27a, 27b perpendiculaires à l'axe X et réunies, à proximité du plan médian 30, à deux pattes intégrées 33a, 33b et, latéralement, de chaque côté de l'élément 55b, à deux groupes d'autres pattes intégrées, respectivement 35a, 35b et 37a, 37b (voir également figs.5 et 6).

Ces multiples pattes, et même ici double pattes, portent un arbre 38 d'articulation, en une ou plusieurs parties, engagé à travers certaines au moins desdites pattes, lesquelles définissent ainsi des pattes de pivots d'articulation par rapport à la caisse 3 de l'élément de toit, ici plus précisément de la structure porteuse monobloc 210 de l'élément arrière de toit 55b, en engageant latéralement des paliers de caisse repérés ici globalement en 39.

Les paliers de caisse 39 comprennent ici trois paliers 39a, 39b, 39c recevant chacun l'arbre ou un tronçon d'arbre 38, suivant l'axe transversal 38a qui est perpendiculaire à X et situé vers/à l'arrière de la structure porteuse 210, sous elle.

Les paliers de caisse 39 sont donc portés par la caisse 3 et appartiennent ici à une structure support 63 de cette caisse figurée schématiquement comme un bloc structurant dressé transversalement à l'axe X, derrière les sièges 9 et vers le bord avant de l'espace de rangement 19.

Outre les paliers d'articulation de l'élément arrière de toit 55b, la structure support 63 de la caisse comprend, ou intègre, ici les paliers latéraux 41a,41b d'articulation arrière des bras latéraux 61 de commande en déplacement de l'élément avant de toit 55a par rapport non seulement à la caisse, mais également à cet élément arrière 55b.

Les paliers latéraux 41a, 41b sont situés à proximité immédiate des paliers de caisse 39a,39c, de part et d'autre d'eux, extérieurement et un peu en avant (voir fig.7).

Ces paliers latéraux 41a, 41b reçoivent chacun l'engagement à travers eux du pivot arrière 61b du bras 61 correspondant dont les pivots avant 61a s'articulent à l'élément avant de toit 55a.

Avantageusement, les pivots de rotation ou d'articulation par rapport à la caisse, 39, 41a, 41b, seront, toit assemblé avec la caisse, portés ensemble par la structure support 63, laquelle pourra présenter des surfaces d'appui telles que 63a, 63b, 63c, recevant sur elles des platines, telles que 66 figs.2 et 7, intégrant lesdits paliers 39,41a,41b.

Ainsi, l'élément de toit concerné, pourvu de certains au moins de ses pivots, pourra être aisément monté sur la caisse, par fixation des platines 66 auxdites surfaces d'appui de la caisse. La structure support 63 pourra en particulier être une poutre transversale ou une coque structurante appartenant d'origine à la caisse 3 ou rapportée sur elle avec le toit pré-monté (voir figure 7.)

Il doit être clair que d'autres solutions d'articulation et/ou d'autres éléments de toit pourraient être concernés par de telles pattes et/ou cette structure porteuse monobloc, tels par exemple les éléments de toit latéraux arrière 65a, 65b, que ce soit pour une articulation entre eux et la caisse 3, ou entre eux et au moins un autre élément de toit.

En alternative, ou comme ici en complément à cette fonction de pivots d'articulation, certaines au moins des pattes précitées, voire d'autres pattes monoblocs avec la structure 210, assureront avantageusement une fonction de fixation pour des moyens de commande en mouvement au moins de l'élément de toit portant ces pattes.

Ainsi, figure 7, au moins l'une des pattes centrales, ici 33a, appartenant à la structure monobloc définit une patte de fixation en ce qu'elle reçoit une liaison avec des moyens d'actionnement du toit liés à la caisse 3, tels l'actionneur de puissance 29.

Concernant cette patte 33a, on peut donc la considérer autant comme une patte de pivot d'articulation (voir ci-avant) que comme une patte de fixation.

On aura compris qu'on appelle donc ici « moyens d'actionnement du toit » en particulier tant les moyens actionneurs 29 que les bras de commande 61, dès lors qu'ils agissent, entre la caisse et au moins un dit élément de toit, pour commander l'articulation de cet élément soit par rapport à la caisse, soit par rapport à un autre élément de toit.

En particulier figure 6, on voit que la partie de renfort transversal 27 intègre avantageusement un élément 73 en forme sensiblement de plateau s'étendant entre les deux côtés ou bras latéraux 21a, 21b du cadre 21, ici entre les deux pattes 43a, 43b.

On notera que ces deux côtés latéraux 21a, 21b constituent ici l'équivalent des bras conventionnels précités de renfort portant des articulations du toit ou bien des parties de pivot d'articulation.

L'élément 73 définit une tablette adaptée pour occuper une partie au moins de l'espace s'étendant longitudinalement, toit fermé au-dessus de l'habitacle, entre le bord arrière du toit (côté transversal arrière 21c de la structure porteuse 210) et le dossier des sièges 9.

L'élément 73 est ici intégré à la structure porteuse 210 et donc fixe par rapport à l'élément arrière de toit 55b.

Cet élément 73 s'étend de biais (angle A, fig.5) par rapport à la surface générale (210a) globalement plane, ou légèrement cintrée comme par exemple sur les panneaux de toit traditionnels.

A cet élément 73 pourrait être articulé au moins un autre élément de tablette qui serait mobile par rapport à cet élément arrière de toit et donc par rapport au toit, pour être placé angulairement en fonction de la position du toit sur le véhicule.

En face inférieure, la tablette 73 se raccorde de façon donc monobloc avec la poutre 27 et les pattes précitées.

Le cadre périphérique de la structure 210 est renforcé par des nervures 75a qui s'étendent sur tout ou partie de son périmètre, et en particulier le long de la traverse arrière 27.

Avantageusement les nervures seront tournées vers l'intérieur du véhicule comme illustré à la figure 6 où l'on a marqué en 7 la position de l'habitacle, sous la structure 210.

Cette orientation facilitera le démoulage de la structure.

La partie extérieure sera de préférence lisse, de manière à pouvoir recevoir au mieux des panneaux d'habillage avantageusement collés sur la surface lisse, tel que le panneau extérieur vitré 15.

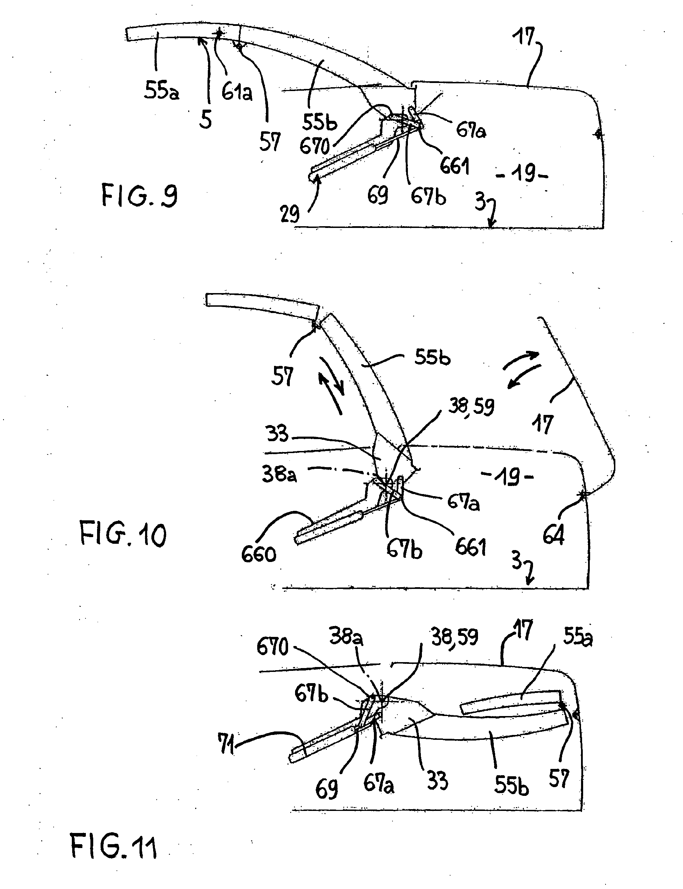

De préférence le cadre périphérique 21, y compris la partie de renfort transversal 27, présentera globalement une forme de poutre ayant des flancs 75b, 75c reliés par lesdites nervures 75a; fig.8.

Ces nervures et la tablette participeront au renfort mécanique de la structure 210.

Comme illustré figures 3 et 4, le toit peut être différent et par exemple comprendre aussi des éléments latéraux de toit 65a, 65b. Ces éléments sont ici articulés respectivement à l'un et l'autre des côtés, ou bras, 21a, 21b de la structure 210.

Chacun de ces côtés de structure intègre une patte arrière 43a, 43b et une patte avant 44a, 44b pour cette liaison articulée entre les éléments de toit considérés. Ainsi, les pattes intégrées 43a, 43b, définissent des pattes de pivots d'articulation ou de fixation pour un élément de toit.

Les pattes 43a, 43b sont situées à l'écart des bords avant et arrière de la structure 210 (pivots 31) ; voir fig.7.

Quant aux pivots 57, ils pourront être montés à l'endroit de pattes latérales avant 78 intégrées au cadre 21, comme montré fig.6.

La structure 210 ainsi conçue pourra servir indifféremment au toit 5 des figures 1 et 2, ou à celui 50 des figures 3 et 4, avec son élément central arrière de toit 550b bordé par les éléments latéraux de toit 65a, 65b.

Figure 4, on retrouve un des bras 61 avec ses pivots 61a, 61b. En 59 se trouve l'articulation à la caisse de l'élément central de toit 550b (pivots 31 et paliers 39). L'un des éléments latéraux de toit 65b est montré lié à cet élément central de toit 550b par les biellettes 77b, 79b articulées en 43b, 44b sur ce dernier et en 83b, 84b sur le premier.

Un système 85 de liaison articulé relie également de façon connue l'élément central arrière de toit 550b à l'élément avant 55a, via une platine 88 intégré à un cadre, tel que 21, de structure moulée de cet élément avant. D'autres moyens d'actionnement, tels la biellette 86 pour les éléments latéraux 65a,65b, ou un moteur électrique avec si nécessaire des tiges,câbles... intermédiaires, pourraient être prévus pour le mouvement relatif entre les éléments de toit en cause et/ou pour un panneau de toit ouvrant. L'articulation 61a peut se faire à l'endroit d'une patte 90 intégrée à la platine 88.

Revenant figure 7, on note que les moyens d'actionnement du toit, et ici plus précisément de la structure porteuse monobloc 210 de l'élément arrière de toit 55b, comprennent l'actionneur 29, qui peut être un vérin à double effet.

Cet actionneur 29 comprend un corps d'actionneur 71 et une tige axiale mobile en translation, 69, laquelle commande deux biellettes 67a, 67b.

Le corps 71 de l'actionneur est fixé ou articulé sur la caisse ici la structure support 63, ou un élément rapporté sur elle.

L'actionneur commande, via lesdites biellettes 67a, 67b, l'articulation de l'élément arrière de toit 55b par rapport à la caisse.

Les biellettes 67a, 67b, ici au nombre de deux, sont reliées vers une première extrémité, et ensemble, à la tige 69 du vérin 29. Ici, elles sont ensemble articulées sur cette tige 69.

A sa seconde extrémité la première biellette 67a est attachée sur l'élément de toit, ici articulée à proximité du pivot 38,59 (axe 38a), donc du renfort transversal 27,73.

Figure 7, la seconde biellette 67b est articulée sur un pivot 670 qui, à proximité du pivot d'articulation de l'élément de toit 55b ici concerné, ou du moins de son axe 38a, est relié à la caisse ou, comme ici, à l'élément support 66 à fixer/fixé à cette caisse.

Pour le pivotement transversal recherché, l'arbre du pivot 670 s'engage à travers la seconde extrémité de la seconde biellette 67b, et à travers des passages communicants ménagés dans le palier 39b (repère 671) et au moins dans la patte 33a, de préférence dans les deux pattes 33a, 33b.

Figs.9, 10 et 11, on retrouve quasiment la solution de la fig.7. La première biellette 67a est attachée sur l'élément de toit 55b. Ici, elle est articulée à la patte 33, à proximité de l'axe 38a (marqué d'un croix) du pivot de toit 38, 59. La seconde biellette 67b est articulée sur le pivot 670 qui, à proximité des articulations précitées de la première biellette et du pivot 38, 59, est relié à un élément support 660 à fixer/fixé à la caisse 3.

A leur autre extrémité, ces deux biellettes sont en commun articulées en 661 à la tige 69 du vérin 29.

Les trois figures montrent l'évolution des articulations, successivement en position fermée du toit, intermédiaire et ouverte, toit alors escamoté dans le coffre 19, après basculement vers l'arrière du capot 17 autour de son pivot arrière 64.

L'élément de toit arrière 55b est alors sensiblement à plat, à l'envers, sa concavité vers le haut, avec l'élément de toit avant 55a replié par dessus lui.

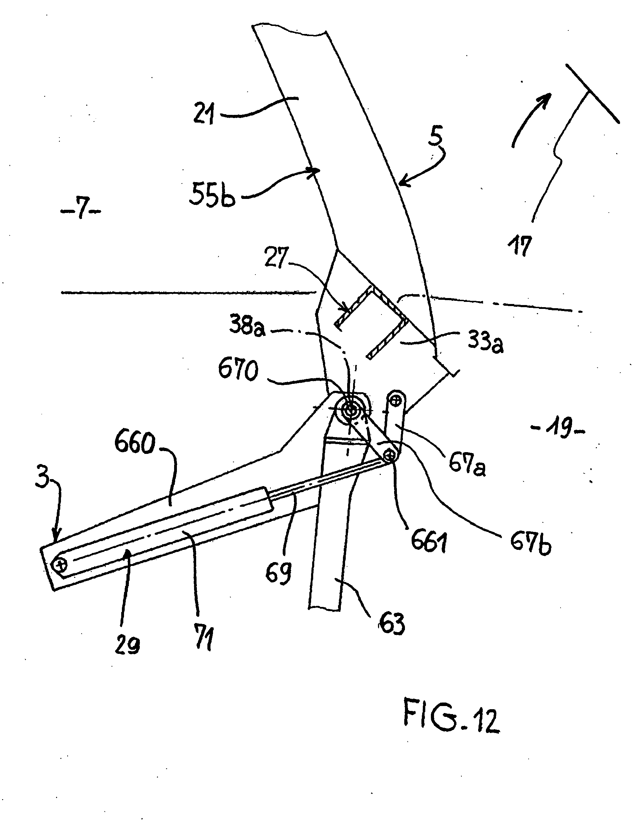

Figure 12, l'élément de toit 55b schématisé est considéré dans son état intermédiaire entre fermé et ouvert.

L'axe du pivot 670 (déjà présenté figs.7 et 9 à 11) est ici coaxial à l'axe 38a de pivotement de l'élément rigide de toit (55b ici). Les deux pivots 38,670 sont même confondus. Seul le pivot 670 apparaît donc et demeure.

Le pivot 670 sert alors à la fois pour l'articulation de la biellette 67b et pour le pivotement du toit par rapport à la caisse (élément 55b), en liaison avec les pivots latéraux pourvus des deux tronçons d'arbre 38 précités.

Le cadre 21, qui peut bien entendu être toujours prévu, comme sur les figs.9 à 11, favorisera par sa raideur et sa légèreté le fonctionnement d'ensemble.

La tige 69 est sortie à moitié.

L'inclinaison du vérin 29 pourrait être différente de celle illustrée.

La structure transversale 27, 73 qui relie entre eux ces pivots latéraux et central favorisera aussi l'efficacité de la solution.

Figs.7, l'actionneur de puissance 29 est central, monté à l'endroit ou à proximité du plan médian 30. On doit comprendre qu'il en est favorablement de même figs.9 à 12.

Favorablement, les deux biellettes 67a, 67b seront articulées sur la caisse ou ledit élément support, à proximité l'une de l'autre.

Fig.7, on remarquera encore que, suivant l'axe longitudinal (X), la seconde extrémité articulée 61b du bras 61 est favorablement située à proximité (légèrement en avant) de l'axe 38a et donc de l'attache de la première biellette 67a sur l'élément de toit arrière.

Les avantages liés à la technique et au produit qui vient d'être présenté, dans son détail ou au moins ses caractéristiques principales sont au demeurant multiples. On peut noter :
- l'utilisation d'une pièce monobloc qui permet de réduire les différentes sections périphérique du cadre (21) en intégrant directement dans la structure (210) les pièces de renfort (bras support 21a, 21b, traverse arrière 27, support de pivots 33a...35a...37b) qui sont habituellement réalisées indépendamment de l'élément de toit concerné, sont rapportées et qui nécessitent de nombreuses et complexes opérations de montage.
- l'optimisation de la structure (210), avec possibilité de diminuer substantiellement son encombrement propre et en conséquence de permettre de diminuer les volumes de garnissage et d'offrir ainsi plus d'espace dans l'habitacle.
- l'optimisation également possible par réduction sensible du poids de la structure, tout en conservant, voir en améliorant, les caractéristiques de rigidité, notamment grâce au nervurage et à la répartition ciblée de la matière, par exemple au niveau de la traverse arrière 27.
- la réduction de la déformation du toit au vent et lors des mouvements de rangement et de déploiement du toit (fermeture/ouverture).
- la transmission des efforts de fermeture et d'ouverture du toit par la structure porteuse (210).
- le matériau moulé qui permet de réduire les vibrations du toit grâce aux propriétés d'amortissement de ces types de matériaux, en particulier l'alliage de magnésium,
- la technique de moulage privilégiée, par injection, qui doit permettre d'obtenir directement les parties fixes de pivot, tels que l'articulation arrière de toit en 33a...37b et/ou l'articulation d'un autre élément de toit, tel en particulier l'élément avant 55a, et/ou des pattes (33a notamment) de prise de mouvement d'un actionneur.
- dans le cas d'un toit possédant des éléments latéraux (figures.3,4), la possibilité d'obtenir directement des pattes de pivot d'articulation moulées. L'obtention de parties de pivot ou de pattes de fixation (33a, 43a) par moulage doit favoriser la précision dimensionnelle, ce qui permettra de réduire les tolérances de fabrication et d'améliorer la précision des jeux et donc le fonctionnement du toit. On pourra au besoin prévoir un usinage de ces parties de façon à augmenter encore la précision de réalisation,
- avec le système à deux biellettes précité (67a, 67b), la possibilité d'obtenir une commande de toit performante et compacte
- les coûts de fabrication et/ou d'assemblage peuvent être notablement réduits .

D'autres éléments de toit qu'un élément arrière de toit pourraient être concernés par une partie au moins de ce qui a été décrit ci-avant pour cet élément.

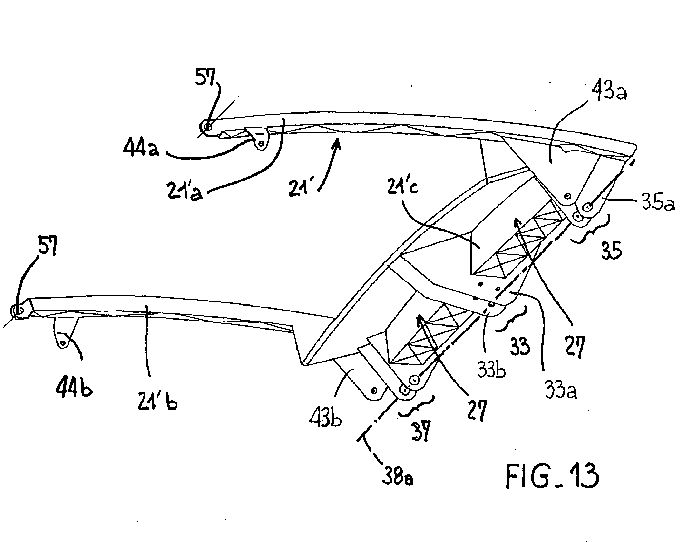

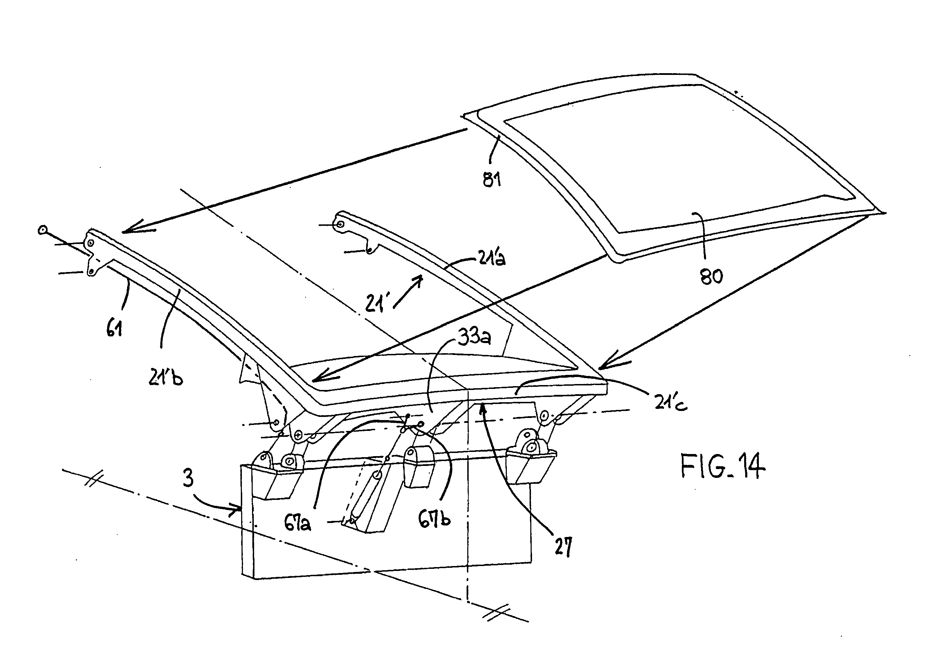

Figs. 13 et 14, on a illustré une alternative où le cadre périphérique précité, ici repéré 21', est ouvert. Il est ici dépourvu de traverse avant. Il présente une forme en U comprenant une traverse renforcée arrière 21'c d'où partent vers l'avant, en position fermée du toit comme sur les deux figures, deux bras latéraux 21'a, 21'b portant toujours chacun, à l'avant, les pattes 44a, 44b pour l'articulation avec un élément de toit avant, ainsi que les pivots 57.

Pour le reste du cadre 21', tout reste identique à ce qui a été décrit précédemment, y compris sa liaison articulée à la caisse 3. On retrouve ainsi les biellettes 67a, 67b et le bras de commande 61, ainsi que le renfort transversal en forme de poutre nervurée 27 reliant entre eux, globalement suivant l'axe transversal 38a, les différents moyens pivot du toit, ici repérés globalement 33, 35, 37 fig.13, pour son articulation par rapport à la caisse. La présence préférée des pattes (33a,33b,35a,... 43a,43b) a également été rappelée.

Fig. 14, un panneau 80 est rapporté sur le cadre 21'. Il peut s'agir d'un élément de lunette arrière. On peut prévoir de fixer directement une vitre sur la structure 21'. On pourra préférer fixer une telle vitre sur un cadre intermédiaire 81 qui servira d'interface de fixation au cadre 21', par exemple par vissage. Favorablement, le cadre intermédiaire 81 sera fermé sur lui-même.

## Revendications

1. Elément d'un toit rigide mobile par rapport à une caisse (3) d'un véhicule transformable, **caractérisé en ce que** cet élément est réalisé à partir d'une structure porteuse monobloc (210) présentant une forme de cadre périphérique (21,21').

2. Elément de toit rigide selon la revendication 1, **caractérisé en ce que** la structure porteuse monobloc (210) est :
- une structure moulée à partir d'un alliage léger métallique, au moins essentiellement, ou
- une structure moulée à partir d'un alliage léger contenant essentiellement de l'aluminium ou du magnésium.

3. Elément de toit rigide selon la revendication 1 ou 2, **caractérisé en ce que** la structure porteuse monobloc (210) est :
- une structure moulée à partir d'un alliage léger synthétique, au moins essentiellement, ou
- une structure moulée de type BMC (Bulk Moulding Compound ; moulage d'une pièce de forme, en volume, à partir d'un mélange de matériaux) pouvant comporter une résine et/ou des fibres, ou
- une structure moulée à partir d'une ou plusieurs nappes fibreuses, telles que comprenant des fibres de verre ou de carbone, noyées dans une résine, ou
- une structure moulée à base de matériau thermoplastique ou thermodurcissable.

4. Elément de toit rigide selon l'une des revendications précédentes, **caractérisé en ce que** le cadre périphérique (21,21') comprend une partie (27) de renfort transversal appartenant à la structure monobloc et cette partie de renfort transversal (27) présente globalement une forme de poutre ayant des flancs (75b, 75c) reliés par des nervures (75a).

5. Elément de toit rigide selon la revendication 4, **caractérisé en ce que** la partie de renfort transversal (27) est reliée à des pattes (33a, 33b, 35a...37b) de pivots d'articulation de cet élément de toit et/ou à des pattes (33a) de fixation de moyens d'actionnement dudit élément de toit, lesdites pattes appartenant à la structure monobloc (210).

6. Elément de toit rigide selon l'une des revendications 4 ou 5, **caractérisé en ce que** la partie de renfort transversal (27) intègre un élément définissant une tablette (73).

7. Toit rigide (5, 50) monté sur un véhicule convertible pourvu d'une caisse (3) et d'un habitacle (7), ce toit, qui est mobile par rapport à la caisse entre une position fermée dans laquelle il recouvre au moins en partie l'habitacle (7) et une position ouverte dans laquelle cet habitacle est au moins en partie dégagé, comprenant au moins un élément de toit (55a, 55b, 55b, 65a, 65b) selon l'une des revendications précédentes.

8. Toit rigide selon la revendication 7, **caractérisé en ce que** ledit cadre périphérique (21,21') présente globalement et au moins localement une forme de poutre ouverte vers l'habitacle, toit fermé, et essentiellement lisse à l'opposé, avec des flancs (75b, 75c) reliés par des nervures (75a).

9. Toit rigide selon la revendication 7 ou 8, **caractérisé en ce que** la structure porteuse monobloc (210) dudit élément de toit intègre des parties de pivot d'articulation (39, 41a, 41b) pour un montage articulé de cet élément de toit par rapport à la caisse du véhicule.

10. Toit rigide selon l'une des revendications 7 à 9, **caractérisé en ce que** le cadre périphérique (21') est ouvert, tel un cadre en U, et reçoit un panneau (80), tel une vitre, directement fixé à lui ou avec interposition d'un cadre intermédiaire (81).

11. Toit rigide selon l'une des revendications 7 à 10, **caractérisé en ce que** le toit comprend en outre des éléments rigides de toit latéraux (65a, 65b) situés de part et d'autre dudit au moins un élément de toit (55b,550b) et articulés latéralement (en 43a,44a,43b,44b) au cadre périphérique (21,21',210).

12. Toit rigide selon l'une des revendications 7 à 11, **caractérisé en ce que** ledit au moins un élément de toit (55b,550b) étant un élément de toit arrière derrière lequel est situé un élément rigide avant de toit (55a), lorsque le toit est fermé au-dessus de l'habitacle (7), ces éléments de toit avant et arrière sont articulés l'un par rapport à l'autre autour d'un pivot (57) porté par le cadre périphérique (21,21',210).

13. Véhicule convertible comprenant :
- une caisse (3),
- un habitacle (7),
- un toit rigide (5,50), mobile par rapport à cette caisse entre une position fermée dans laquelle il recouvre au moins en partie l'habitacle (7) et une position ouverte dans laquelle cet habitacle est au moins en partie dégagé, ce toit comprenant au moins un élément rigide de toit,
**caractérisé en ce que** cet élément de toit (55a, 55b, 55b, 65a, 65b) est celui selon l'une des revendications 1 à 6 et/ou le toit est celui selon l'une des revendications 7 à 12.

14. Véhicule convertible la revendication 13, **caractérisé en ce que** ledit cadre périphérique (21,21') étant nervuré (75a) sur tout ou partie de sa périphérie, ces nervures sont tournées vers l'intérieur du véhicule, lorsque le toit est fermé au-dessus de l'habitacle (7).

15. Véhicule convertible la revendication 13 ou 14, **caractérisé en ce que** :
- ce véhicule présente un axe longitudinal (X), un plan vertical médian (30) passant par cet axe, un avant et un arrière,
- ledit élément rigide de toit (55b,550b) est pourvu d'un pivot (59,38a,38,39b,33a,33b) d'articulation par rapport à la caisse,
- et des moyens d'actionnement (29,61...) sont prévus pour le déplacement du toit par rapport à la caisse, lesdits moyens d'actionnement comprenant :
* un actionneur de puissance (29) pour l'articulation du toit par rapport à la caisse, cet actionneur, attaché (via 71) à la caisse ou à un élément support (63) à fixer/fixé à cette caisse, comprenant une tige (69) mobile en translation,
* une première et une seconde biellettes (67a, 67b) reliées chacune à la tige mobile (69) qui les commande et articulées, pour la première (67a), sur l'élément de toit, et, pour la seconde (67b), sur un pivot (38,670) relié à la caisse (3) ou à un élément support (63,66,660) à fixer/fixé à cette caisse, à l'endroit de l'axe (38a) du pivot (38,59) d'articulation dudit élément rigide de toit (55b, 550b) ou à proximité de lui.

16. Véhicule selon la revendication 15, **caractérisé en ce que** :
- l'élément de toit est un élément rigide de toit arrière (55b, 550b) comprenant une lunette arrière (15),
- le toit comprend en outre un élément rigide avant de toit (55a) situé devant l'élément de toit arrière, lorsque le toit est fermé au-dessus de l'habitacle (7),
- le véhicule comprend en outre au moins un bras (61) articulée à l'arrière sur la caisse ou sur ledit élément support (63,66,660) à fixer/fixé à cette caisse et lié, à l'avant et de façon articulée, à l'un au moins desdits éléments de toit,
- et la première biellette (67a) est articulée sur l'élément arrière de toit, à l'écart dudit bras (61).

17. Véhicule selon la revendication 13 et l'une au moins des revendications 4 ou 8, **caractérisé en ce que** :
- il présente un avant, un arrière, un axe longitudinal,
- l'élément de toit est un élément arrière (55b, 550b) du toit situé vers l'arrière de l'habitacle, dans l'état de recouvrement de celui-ci par le toit, et
- ladite partie de renfort transversal (27) s'étend transversalement audit axe longitudinal (X) du véhicule, vers l'arrière (AR) de l'élément de toit.

18. Véhicule selon la revendication 17, **caractérisé en ce que** :
- ledit élément (55b, 550b) arrière de toit est articulé à la caisse (3, 63) dans une zone située vers l'arrière de cet élément arrière de toit, et
- ladite partie de renfort transversal (27) est située près de cette zone arrière d'articulation dudit élément arrière de toit par rapport à la caisse.

19. Véhicule selon les revendications 5 et 17, **caractérisé en ce que** :
- certaines au moins desdites pattes de pivots d'articulation (33a,...35a, 35b,...37b) engagent des paliers (39) de caisse pour l'articulation dudit élément (55b,550b) arrière de toit par rapport à la caisse, et/ou
- certaines au moins desdites pattes de fixation (33a) reçoivent une liaison avec lesdits moyens (29) d'actionnement dudit élément de toit, lesquels sont liés à la caisse, et/ou
- certaines au moins desdites pattes de fixation (43a, 43b, 44a, 44b) reçoivent une liaison (61, 77b, 79b) articulée avec autre élément de toit (55a, 65a, 65b appartenant au toit.

20. Véhicule selon la revendication 13, **caractérisé en ce que** :
- ledit cadre périphérique (21) est relié à des pattes (33a...35b...37b, 43a...44b) de pivots d'articulation de l'élément de toit considéré et/ou à des pattes (33a, 43a...44b) de fixation de moyens (29, 61) d'actionnement de cet élément de toit et/ou du toit, lesdites pattes appartenant à la structure monobloc (210),
- si elles existent, certaines au moins desdites pattes (33a...35b...37b, 43a, 43b, 78) de pivots d'articulation engagent des paliers de caisse (39, 41a, 41b) pour l'articulation de cet élément de toit par rapport à la caisse (3, 63), et/ou des moyens (77b, 79b, 57) complémentaires d'articulation d'un autre élément de toit, pour l'articulation entre eux desdits éléments de toit, et
- si elles existent, certaines au moins desdites pattes de fixation (33a,90) reçoivent une liaison avec lesdits moyens (29,61) d'actionnement du toit, lesquels sont liés à la caisse et comprennent :
* des premiers moyens (29) d'actionnement pour commander l'articulation par rapport à la caisse de l'élément de toit correspondant,
* et/ou des seconds moyens (61, 85) d'actionnement pour commander l'articulation entre ledit autre élément de toit (55a; 55b; 550b) considéré appartenant au toit et la caisse et/ou entre cet autre élément de toit et ledit élément de toit (55b, 550b; 55a).

## Revendications modifiées

### Revendications modifiées conformément à la règle 86(2) CBE.

**1.** Elément d'un toit rigide mobile par rapport à une caisse (3) d'un véhicule transformable, cet élément étant réalisé à partir d'une structure porteuse monobloc (210) présentant une forme de cadre périphérique (21,21'), **caractérisé en ce que** le cadre périphérique (21,21') est nervuré sur tout ou partie de sa périphérie et comprend en outre une partie (27) de renfort transversal appartenant à la structure monobloc et cette partie de renfort transversal (27) présente globalement une forme de poutre ayant des flancs (75b, 75c) reliés par d'autres nervures (75a).

**2.** Elément de toit rigide selon la revendication 1, **caractérisé en ce que** la partie de renfort transversal (27) est réunie à des pattes (33a, 33b, 35a...37b) de pivots d'articulation de cet élément de toit et/ou à des pattes (33a) de fixation de moyens d'actionnement dudit élément de toit, lesdites pattes appartenant à la structure monobloc (210).

**3.** Elément de toit rigide selon l'une des revendications 1 ou 2, **caractérisé en ce que** la partie de renfort transversal (27) intègre un élément définissant une tablette (73).

**4.** Elément de toit rigide selon l'une des revendications précédentes, **caractérisé en ce que** la partie de renfort transversal (27) comprend deux parties de poutres (27a, 27b) transversales à un axe (X) passant par un plan médian (30) et réunies, à proximité de ce plan médian, à deux pattes intégrées (33a,33b) et, latéralement, à d'autres pattes intégrées (35a,35b,37a, 37b).

**5.** Elément de toit rigide selon l'une des revendications précédentes, **caractérisé en ce que** la structure porteuse monobloc (210) est :
- une structure moulée à partir d'un alliage léger métallique, au moins essentiellement, ou
- une structure moulée à partir d'un alliage léger contenant essentiellement de l'aluminium ou du magnésium.

**6.** Elément de toit rigide selon l'une des revendications 1 à 4, **caractérisé en ce que** la structure porteuse monobloc (210) est :
- une structure moulée de type BMC (Bulk Moulding Compound) pouvant comporter une résine et/ou des fibres, ou
- une structure moulée à partir d'une ou plusieurs nappes fibreuses, telles que comprenant des fibres de verre ou de carbone, noyées dans une résine, ou
- une structure moulée à base de matériau thermoplastique ou thermodurcissable.

**7.** Toit rigide (5, 50) monté sur un véhicule convertible pourvu d'une caisse (3) et d'un habitacle (7), ce toit, qui est mobile par rapport à la caisse entre une position fermée dans laquelle il recouvre au moins en partie l'habitacle (7) et une position ouverte dans laquelle cet habitacle est au moins en partie dégagé, comprenant au moins un élément de toit (55a, 55b, 55b, 65a, 65b) selon l'une des revendications précédentes, ladite poutre, qui s'étend transversalement à l'axe longitudinal (X) du véhicule, présentant une section ouverte vers l'habitacle, toit fermé, et étant essentiellement lisse extérieurement, à l'opposé.

**8.** Toit rigide selon la revendication 7, **caractérisé en ce que** la structure porteuse monobloc (210) dudit élément de toit intègre des parties de pivot d'articulation (39, 41a, 41b) avec lesquelles est réunie latéralement ladite poutre (27), pour un montage articulé de cet élément de toit par rapport à la caisse du véhicule.

**9.** Toit rigide (5, 50) monté sur un véhicule convertible pourvu d'une caisse (3) et d'un habitacle (7), ce toit, qui est mobile par rapport à la caisse entre une position fermée dans laquelle il recouvre au moins en partie l'habitacle (7) et une position ouverte dans laquelle cet habitacle est au moins en partie dégagé, comprenant au moins un élément de toit (55a, 55b, 55b, 65a, 65b) selon l'une des revendications précédentes, dont ladite poutre s'étend transversalement à l'axe longitudinal (X) du véhicule et dont le cadre périphérique (21') présente un périmètre ouvert, tel un cadre en U, et reçoit un panneau (80), tel une vitre, directement fixé à lui ou avec interposition d'un cadre intermédiaire (81).

**10.** Toit rigide selon l'une des revendications 7 à 9, **caractérisé en ce que** :
- ledit au moins un élément de toit (55b,550b) est un élément de toit arrière situé derrière un élément rigide avant de toit (55a), lorsque le toit est fermé au-dessus de l'habitacle (7),
- ces éléments de toit avant et arrière sont articulés l'un par rapport à l'autre autour d'un pivot (57) porté par le cadre périphérique (21,21',210),
- et, à l'une au moins desdites pattes de fixation (33a) réunie latéralement à ladite poutre (27) sont reliées des moyens (29) d'actionnement de l'élément de toit arrière.

**11.** Toit rigide selon l'une des revendications 7 à 10, **caractérisé en ce que** le toit comprend en outre des éléments rigides de toit latéraux (65a, 65b) situés de part et d'autre dudit au moins un élément de toit (55b,550b) et articulés latéralement (en 43a,44a,43b,44b) au cadre périphérique (21,21',210).

**12.** Véhicule convertible comprenant :
- une caisse (3),
- un habitacle (7),
- un toit rigide (5,50), mobile par rapport à cette caisse entre une position fermée dans laquelle il recouvre au moins en partie l'habitacle (7) et une position ouverte dans laquelle cet habitacle est au moins en partie dégagé, ce toit comprenant au moins un élément rigide de toit, **caractérisé en ce que** :
- cet élément de toit (55a, 55b, 55b, 65a, 65b) est celui selon l'une des revendications 1 à 6, ladite poutre s'étendant transversalement à l'axe longitudinal (X) du véhicule,
- et/ou le toit est celui selon l'une des revendications 7 à 11.

**13.** Véhicule convertible la revendication 12, **caractérisé en ce que** les nervures de la poutre transversale (27) sont tournées vers l'intérieur du véhicule, lorsque le toit est fermé au-dessus de l'habitacle (7).

**14.** Véhicule convertible selon la revendication 12 ou 13 et utilisant le toit rigide selon la revendication 10, **caractérisé en ce que** :
- ce véhicule présente un axe longitudinal (X), un plan vertical médian (30) passant par cet axe, un avant et un arrière,
- ledit élément rigide de toit (55b,550b) est pourvu d'un pivot (59,38a,38,39b,33a,33b) d'articulation par rapport à la caisse,
- et, pour le déplacement du toit par rapport à la caisse, sont prévus des moyens d'actionnement (29,61...) comprenant :
* un actionneur de puissance (29) pour l'articulation du toit par rapport à la caisse, cet actionneur, attaché (via 71) à la caisse ou à un élément support (63) à fixer/fixé à cette caisse, comprenant une tige (69) mobile en translation,
* une première et une seconde biellettes (67a, 67b) reliées chacune à la tige mobile (69) qui les commande et articulées, pour la première (67a), sur l'une au moins desdites pattes de fixation (33a) de l'élément de toit arrière, et, pour la seconde (67b), sur un pivot (38,670) relié à la caisse (3) ou à un élément support (63,66,660) à fixer/fixé à cette caisse, à l'endroit de l'axe (38a) du pivot (38,59) d'articulation dudit élément rigide de toit (55b, 550b) ou à proximité de lui.

**15.** Véhicule selon la revendication 12, **caractérisé en ce que** :
- il présente un avant, un arrière, un axe longitudinal,
- l'élément de toit est un élément arrière (55b, 550b) du toit situé vers l'arrière de l'habitacle, dans l'état de recouvrement de celui-ci par le toit,
- ledit élément (55b, 550b) arrière de toit est articulé à la caisse (3, 63) dans une zone située vers l'arrière de cet élément arrière de toit, et
- ladite partie de renfort transversal (27) est située près de cette zone arrière d'articulation dudit élément arrière de toit par rapport à la caisse.

**16.** Véhicule selon les revendications 2 et 12, **caractérisé en ce que** :
- il présente un avant, un arrière, un axe longitudinal,
- l'élément de toit est un élément arrière (55b, 550b) du toit comprenant une lunette arrière (15),
- ladite partie de renfort transversal (27) s'étend transversalement audit axe longitudinal (X) du véhicule, vers l'arrière (AR) de l'élément de toit,
- certaines au moins desdites pattes de pivots d'articulation (33a,...35a, 35b,...37b) engagent des paliers (39) de caisse pour l'articulation dudit élément (55b,550b) arrière de toit par rapport à la caisse, et
- certaines au moins desdites pattes de fixation (33a) reçoivent une liaison avec lesdits moyens (29) d'actionnement dudit élément de toit, lesquels sont liés à la caisse, et/ou
- certaines au moins desdites pattes de fixation (43a, 43b, 44a, 44b) reçoivent une liaison (61, 77b, 79b) articulée avec autre élément de toit (55a, 65a, 65b appartenant au toit.

**17.** Véhicule selon la revendication 12, **caractérisé en ce que** ledit cadre périphérique (21) est relié à des pattes (33a...35b...37b, 43a...44b) de pivots d'articulation de l'élément de toit considéré et/ou à des pattes (33a, 43a...44b) de fixation de moyens (29, 61) d'actionnement de cet élément de toit et/ou du toit, lesdites pattes appartenant à la structure monobloc (210).

**18.** Véhicule selon la revendication 17, **caractérisé en ce que** le cadre périphérique (21) est relié auxdites pattes (33a...35b...37b, 43a...44b) de pivots d'articulation de l'élément de toit considéré, lesquelles engagent des paliers de caisse (39, 41a, 41b) pour l'articulation de cet élément de toit par rapport à la caisse (3, 63), et/ou des moyens (77b, 79b, 57) complémentaires d'articulation d'un autre élément de toit, pour l'articulation entre eux desdits éléments de toit.

**19.** Véhicule selon la revendication 17, **caractérisé en ce que** le cadre périphérique (21) est relié auxdites pattes (33a, 43a...44b) de fixation de moyens (29, 61) d'actionnement de l'élément de toit considéré et/ou du toit et certaines au moins de ces pattes reçoivent une liaison avec lesdits moyens (29,61) d'actionnement du toit, lesquels sont liés à la caisse et comprennent :
* des premiers moyens (29) d'actionnement pour commander l'articulation par rapport à la caisse de l'élément de toit correspondant,
* et/ou des seconds moyens (61, 85) d'actionnement pour commander l'articulation entre ledit autre élément de toit (55a; 55b; 550b) considéré appartenant au toit et la caisse et/ou entre cet autre élément de toit et ledit élément de toit (55b, 550b; 55a).
